# EUROPÄISCHE PATENTANMELDUNG

(11) **EP 3 772 508 A1**
(43) Veröffentlichungstag der Anmeldung: **10.02.2021**
(21) Anmeldenummer: 20181366.4
(22) Anmeldetag: 22.06.2020
(51) Int. Cl.: C05B 11/04

(54) **VERFAHREN ZUR HERSTELLUNG VON DÜNGEMITTELGRANULAT**

(30) Priorität: 08.08.2019 DE 102019211960
(71) Anmelder: Glatt Ingenieurtechnik GmbH, 99427 Weimar (DE)
(72) Erfinder: Jacob, Dr. Michael, 99425 Weimar (DE)
(74) Vertreter: Patentanwälte Magenbauer & Kollegen Partnerschaft mbB

(57) **Zusammenfassung**

Die Erfindung betrifft ein Verfahren zur Herstellung von Düngemittelgranulat, wobei zuerst eine Suspension aus einem phosphathaltigen Rohstoff und einer Säure in einer einen Reaktor (3) aufweisenden Reaktoreinheit (4) erzeugt wird, und wobei ein Mahlvorgang in der Reaktoreinheit (4) erfolgt und die Suspension danach einer Sprüheinrichtung (10) zur Granulation und/oder Trocknung zugeführt wird.

## Beschreibung

Die Erfindung betrifft ein Verfahren zur Herstellung von Düngemittelgranulat, wobei zuerst eine Suspension aus einem phosphathaltigen Rohstoff und einer Säure in einer einen Reaktor aufweisenden Reaktoreinheit erzeugt wird.

Verfahren und Vorrichtungen zur Herstellung von Düngemittelgranulaten gehören seit vielen Jahren zum Stand der Technik. Aufgrund gesetzlicher Vorgaben und der Abnahme der weltweiten Phosphorvorräte wird eine Phosphorrückgewinnung aus phosphathaltigen Rohstoffen, wie bspw. Aschen aus der Mono- oder Mitverbrennung von Klärschlamm, Tierausscheidungen, Tiermehl, Tierresten und Tierkörpern, Aschen aus der Verbrennung von Gülle und Gärresten als Einzelstoff bzw. Gemische daraus, immer wichtiger für die Industrie.

In der Offenlegungsschrift DE 10 2009 020 745 A1 ist ein Verfahren zur Gewinnung von Wertstoffen aus Klärschlammprodukten durch Extraktion offenbart, wobei eine Suspension des Klärschlammproduktes in Wasser, Alkohol, einem Wasser/AlkoholGemisch oder einer wässrigen Lösung hergestellt und gasförmiges oderüberkritisches Kohlendioxid als Extraktionsmittel in diese Suspension des Klärschlammproduktes eingeleitet wird, ungelöste Feststoffe von dem flüssigen Suspendiermittel abgetrennt, Kohlendioxid aus dem Suspendiermittel entfernt und in dem Suspendiermittel gelöste Wertstoffe ausgefällt und von dem Suspendiermittel abgetrennt werden. Nachteilig an diesem Verfahren ist der sehr hohe Aufwand zu dessen Durchführung wodurch das Verfahren sehr kostenintensiv ist.

Die DE 10 2016 116 633 A1 offenbart ein Verfahren zur Herstellung von Düngemittelgranulaten, wobei der phosphathaltige Sekundärrohstoff mit einer Mineralsäure zu einer Suspension versetzt wird und die Suspension anschließend einer Granulation zugeführt wird sowie die mit dem Verfahren hergestellten Düngemittelgranulate. Nachteilig hieran ist, dass die zu Düngemittelgranulaten verarbeitete Suspension Rohstoffpartikel aufweist, die reaktionsträge sind und an Engstellen in einer Vorrichtung wie Düsen zur Verstopfung dieser neigen.

Aufgabe der Erfindung ist es daher die aus dem Stand der Technik bekannten Nachteile zu überwinden und ein Verfahren bereitzustellen, das Düngemittelgranulate herstellt, wobei die in der Suspension gelösten Rohstoffpartikel eine große Reaktivität aufweisen und an Engstellen der Vorrichtung, wie Düsen, nicht zur Verstopfung dieser neigen.

Die Aufgabe wird durch ein Verfahren eingangs genannter Art dadurch gelöst, dass ein Mahlvorgang in der Reaktoreinheit erfolgt und die Suspension danach einer Sprüheinrichtung zur Granulation und/oder Trocknung zugeführt wird. Durch den vor der Granulation und/oder Trocknung erfolgenden Mahlvorgang wird die Prozessstabilität gesteigert, indem durch den Mahlvorgang die große Rohstoffpartikel aufweisenden phosphathaltigen Rohstoffe zerkleinert werden. Hierdurch wird die Reaktionsteilnahme der Rohstoffpartikel auch durch die Vergrößerung der Oberfläche der Rohstoffpartikel erhöht, d. h. die Kinetik der Reaktion wird beschleunigt, was wiederum zu einer gleichmäßigeren Umsetzung des phosphathaltigen Rohstoffs und zu einer Zeitersparnis führt. Zudem wird die Rohstoffpartikelgröße der Suspension homogenisiert. Gleichzeitig wird darüber hinaus die Verstopfungsgefahr an Engstellen in der Vorrichtung, insbesondere in Düsen, an Klappen und Schiebern oder dergleichen, reduziert. Des Weiteren werden die Sedimentation und der Grobkornanteil im Sand der Rohstoffpartikel durch den Mahlvorgang in der Suspension minimiert. Bevorzugt wird eine Sprühgranulation durchgeführt, insbesondere mittels eines Fluidisierungsapparates, wie einem Wirbel- oder Strahlschichtapparat.

Düngemittel sind Stoffe und Stoffgemische, welche in der Land- und Forstwirtschaft sowie im Gartenbau zur Ergänzung des Nährstoffangebots für die angebauten Pflanzen, insbesondere Kulturpflanzen, mit diversen Eigenschaften, gegebenenfalls kombiniert und/oder funktionalisiert mit weiteren Materialien, benutzt werden.

Düngemittelgranulate sind Düngemittel in Granulatform, insbesondere mit einer annähernd sphärischen Form, einer vorzugsweise ausreichenden Eigenfestigkeit und vornehmlich einer mittleren Granulatgröße von 100 *µ*m bis 25 mm, bevorzugt von 100 *µ*m bis 10 mm, besonders bevorzugt von 250 *µ*m bis 5 mm, ganz besonders bevorzugt von 500 *µ*m bis 3 mm.

Gemäß einer zusätzlichen vorteilhaften Ausgestaltung des Verfahrens erfolgt der Mahlvorgang als Trockenmahlung oder Nassmahlung. Die Trockenmahlung weist als Vorteil eine hohe Mahleffektivität bei geringem Platzbedarf und geringem spezifischen Energieverbrauch auf. Bei der Trockenmahlung ist die gewünschte Endfeinheit der Rohstoffpartikel des phosphathaltigen Rohstoffs frei und exakt einstellbar. Bei der Nassmahlung sind bei einem geringen spezifischen Energieverbrauch auch grobe phosphathaltige Rohstoffe verarbeitbar. Zudem weist die Rührwerkslagerung keine Produktberührung auf. Eine Kombination von Trocken- und Nassmahlung ermöglicht eine Nachmahlung von Suspensionen und trockenen Rohstoffen. Vorteilhaft ist hierbei ein deutlich reduzierter Gesamtenergieverbrauch, eine Durchsatzerhöhung bei gleichbleibender Produktfeinheit oder alternativ eine Steigerung der Produktfeinheit bei gleichbleibendem Durchsatz. Ferner macht die Kombination mit von Trocken- und Nassmahlung den Einsatz von kontinuierlich und diskontinuierlich arbeitenden Mühlen möglich. Besonders bevorzugt erfolgt der Mahlvorgang zeitlich vor oder nach einem Mischvorgang der Suspension. Bei einem zeitlich nach dem Mischvorgang erfolgenden Mahlvorgang wird der phosphathaltige Rohstoff vor dem Mahlvorgang gut durchmischt und es wird eine zumindest teilweise homogene Suspension aus phosphathaltigem Rohstoff und Säure gebildet, sodass der Mahlvorgang in optimaler Weise durchgeführt werden kann.

Bevorzugt erfolgt der Mahlvorgang zeitlich vor oder nach der Erzeugung der Suspension. Wird der Mahlvorgang zeitlich vor der Erzeugung der Suspension in der Reaktoreinheit durchgeführt erfolgt dieser als Trockenmahlung der phosphathaltigen Rohstoffe im Rohstoffzulauf. Im Gegensatz hierzu wird eine Nassmahlung der phosphathaltigen Rohstoffe zeitlich während und/oder nach der Erzeugung der Suspension in der Reaktoreinheit durchgeführt. Bei einer Kombination von Trocken- und Nassmahlung im Verfahren findet ein Mahlvorgang sowohl zeitlich vor als auch zeitlich während und/oder nach der Erzeugung der Suspension in der Reaktoreinheit statt. Durch den Einsatz der beiden unterschiedlichen Mahlverfahren wird für den Anlagenbauer bei der Auslegung des Verfahrens die Möglichkeit geschaffen die Vorrichtung auf die unterschiedlichen phosphathaltigen Rohstoffe gezielt anzupassen und damit auch das Verfahren optimal an die zu verarbeitenden phosphathaltigen Rohstoffe anzupassen.

Nach einer weiteren Fortbildung des Verfahrens ist die Säure eine Mineralsäure, bevorzugt Salz-, Schwefel-, Salpeter- oder Phosphorsäure, oder ein beliebiges Gemisch aus den vorgenannten Mineralsäuren.

Entsprechend einer zusätzlichen vorteilhaften Ausgestaltung des Verfahrens wird der Reaktoreinheit eine wässrige Lösung oder Wasser zugeführt. Die Zuführung einer wässrigen Lösung oder von Wasser ermöglicht eine gezielte Aufschlämmung der erzeugten Suspension, um eine verbesserte Durchmischung, eine Auflockerung und bessere Fließeigenschaften der Suspension zu erzielen, sodass u. a. der Mahlvorgang in der Mahleinheit erleichtert wird. Bevorzugt wird der Reaktoreinheit die wässrige Lösung oder Wasser zwischen Mischvorgang in der Mischeinheit und Mahlvorgang in der Mahleinheit zugeführt.

Nach einer zusätzlichen vorteilhaften Weiterbildung des Verfahrens wird ein pH-Wert der Suspension in der Reaktoreinheit eingestellt, um eine Klebrigkeit der Suspension einzustellen. Bevorzugt wird der pH-Wert der Suspension zeitlich vor der Granulation und/oder Trocknung eingestellt. Hierzu wird vorzugsweise in der Reaktoreinheit nach dem Mahlvorgang eine Messung des pH-Istwerts der Suspension durchgeführt. Dieser wird anschließend in einer Regeleinrichtung mit einem für das Verfahren, insbesondere die Sprühgranulation, vorgegebenen pH-Sollwert abgeglichen und entsprechend eingeregelt. Der Reaktoreinheit wird zur Einstellung des pH-Werts besonders bevorzugt eine Säure oder eine Lauge zugeführt. Durch die pH-Wert Regelung bspw. mittels pH-Wert-Regeleinrichtung besteht somit die Möglichkeit den pH-Wert der sich aus phosphathaltigem Rohstoff und Säure, insbesondere einer Mineralsäure, bildenden Suspension einzustellen. Die Einstellung des pH-Werts der Suspension wirkt sich entsprechend auf die Klebrigkeit der Suspension aus, die wiederum für das Verdüsen der Suspension mittels Sprüheinrichtung von sehr großer Bedeutung ist. Die pH-Wert Regelung kann auch als zusätzlicher externer Regelkreis ausgebildet sein.

Darüber hinaus wird bei einer weiteren vorteilhaften Ausgestaltung des Verfahrens der phosphathaltige Rohstoff zeitlich vor einer Zuführung zur Reaktoreinheit, d. h. stromauf der Reaktoreinheit, klassiert. Vorzugsweise erfolgt das Klassieren durch Sieben oder Sichten. Hierdurch wird neben dem Herausfiltern von groben Abfällen eine Vorauswahl der weiterzuverarbeitenden phosphathaltigen Rohstoffpartikel erreicht, sodass das herzustellende Düngemittelgranulat eine besonders hohe Qualität aufweist, da ausschließlich Rohstoffpartikel mit einem bestimmten maximalen Durchmesser verarbeitet werden. Die Trennung des phosphathaltigen Rohstoffs erfolgt in Fraktionen, vorzugsweise nach den Kriterien Partikelgröße oder Partikeldichte, mit dem Ziel die Herstellung von mindestens zwei Teilmengen des ursprünglichen phosphathaltigen Rohstoffs zu erreichen, wobei jede Teilmenge möglichst vollständig den vorgegebenen Partikelgrößenkriterien für die Weiterverarbeitung entspricht.

Gemäß einer weiteren vorteilhaften Ausgestaltung des Verfahrens werden in der in der Reaktoreinheit erzeugten Suspension die schwerlöslichen Phosphate des phosphathaltigen Rohstoffs durch die Säure, insbesondere eine Mineralsäure, zumindest teilweise gelöst und in eine neutral-ammoniumcitratlösliche Phosphatphase umgewandelt, sodass sich ein Düngemittelgranulat bildet dessen P₂O₅-Gehalt (P-Anteil) größer 75 % neutralammoniumcitratlöslich ist. Die Löslichkeiten liefern Anhaltspunkte für die Wirkungsdynamik des jeweiligen Düngemittels geben. Der säurelösliche P-Anteil von Düngemitteln wird als langfristig nutzbar angesehen. Langfristig bedeutet hierbei über mehrere Fruchtfolgen hinweg. Dieser in "Königswasser" lösliche P-Anteil wird als Gesamtgehalt bezeichnet. Der neutral-ammoniumcitratlösliche P-Anteil kann als Anhaltspunkt für die mittelfristige Verfügbarkeit des Phosphats herangezogen werden, d. h. über den Zeitraum von etwa einer Fruchtfolge und der unmittelbar verfügbare P-Anteil eines Düngemittels wird durch seine Löslichkeit in Wasser beschrieben. Je höher der wasserlösliche Anteil, desto schneller bzw. leichter die Verfügbarkeit des Dünge-P für die Pflanze. Die Löslichkeiten haben in erster Linie den Zweck, jeweils ganz bestimmte Phosphatdüngemittel zu charakterisieren, d. h. sie in ihren typbestimmenden Bestandteilen zu beschreiben.

Nach einer zusätzlichen vorteilhaften Weiterbildung des Verfahrens wird die in der Reaktoreinheit erzeugte Suspension rezirkuliert. Durch Änderung des Anteils des rezirkulierten Suspensionsstoffstroms ist das im Reaktor, insbesondere im Rohrreaktor, befindliche Reaktionsvolumen und die Verweilzeit der Suspension in der Reaktoreinheit getrennt voneinander einstellbar. Die Rezirkulation der Suspension verlängert die durchschnittliche Verweilzeit der Suspension in der Reaktoreinheit, wodurch ein besserer Aufschluss des in der Reaktoreinheit befindlichen phosphathaltigen Rohstoffs erreichbar ist oder erreicht wird.

Ferner wird das Verfahren zur Herstellung von Düngemittelgranulat mit einer Vorrichtung umfassend eine über einen Rohstoffzulauf, einen Säurezulauf und einen Reaktorablauf verfügende, einen Reaktor aufweisende Reaktoreinheit zur Erzeugung einer Suspension aus einem phosphathaltigen Rohstoff und einer Säure sowie eine Sprüheinrichtung, wobei die Vorrichtung eine stromauf der Sprüheinrichtung angeordnete Mahleinheit für den phosphathaltigen Rohstoff aufweist, durchgeführt. Durch den vor der Granulation und/oder Trocknung mittels der Mahleinheit erfolgenden Mahlvorgang wird die Prozessstabilität gesteigert, indem durch den Mahlvorgang die große Rohstoffpartikel aufweisenden phosphathaltigen Rohstoffe zerkleinert werden. Hierdurch wird die Reaktionsteilnahme der Rohstoffpartikel auch durch die Vergrößerung der Oberfläche der Rohstoffpartikel erhöht, d. h. die Kinetik der Reaktion wird beschleunigt, was wiederum zu einer gleichmäßigeren Umsetzung des phosphathaltigen Rohstoffs und zu Zeitersparnis führt. Zudem wird die Rohstoffpartikelgröße homogenisiert. Gleichzeitig wird zudem die Verstopfungsgefahr an Engstellen in der Vorrichtung, insbesondere in Düsen, an Klappen und Schiebern oder dergleichen, reduziert. Darüber hinaus wird die Sedimentation und der Grobkornanteil im Sand der Rohstoffpartikel durch den mittels der Mahleinheit durchgeführten Mahlvorgang minimiert.

In einer bevorzugten Ausgestaltung der Vorrichtung sind Mahleinheit, Reaktoreinheit und Sprüheinrichtung fluidisch miteinander verbunden. Insbesondere sind Reaktoreinheit und Sprüheinrichtung mittels Rohrleitung, Schlauchverbindung, Transportband oder dergleichen miteinander verbunden, sodass eine Sprüheinrichtung, insbesondere kontinuierlich, mit der erzeugten Suspension zur Herstellung des Düngemittelgranulats versorgbar ist.

Nach einer weiteren vorteilhaften Weiterbildung der Vorrichtung ist die Reaktoreinheit, bevorzugt der Reaktor, als Rohrreaktor ausgebildet. Die Ausbildung der Reaktoreinheit, insbesondere des Reaktors, als Rohrreaktor weist die Vorteile auf, dass diese Bauform einfach und kostengünstig realisierbar ist. Darüber hinaus weist der Rohrreaktor den Vorteil auf, dass gegenüber einem Rührkesselreaktor ein höherer Umsatz und eine höhere Selektivität erzielbar ist. Der Rohrreaktor verbindet somit die Vorteile des Batch-Reaktors (diskontinuierlicher Rührkesselreaktors) und des kontinuierlichen Rührkesselreaktors.

Zusätzlich weist die Reaktoreinheit die Mahleinheit entsprechend einer vorteilhaften Fortbildung der Vorrichtung auf. Bevorzugt ist die Mahleinheit im als Rohrreaktor ausgebildeten Reaktor angeordnet. Wird der Mahlvorgang zeitlich vor der Erzeugung der Suspension in der Reaktoreinheit durchgeführt erfolgt dieser als Trockenmahlung der phosphathaltigen Rohstoffe. Die Trockenmahlung weist als Vorteil eine hohe Mahleffektivität bei geringem Platzbedarf und geringem spezifischen Energieverbrauch auf. Bei der Trockenmahlung ist die gewünschte Endfeinheit der Rohstoffpartikel des phosphathaltigen Rohstoffs frei und exakt einstellbar.

Im Gegensatz zur Trockenmahlung wird eine Nassmahlung der phosphathaltigen Rohstoffe zeitlich während und/oder nach der Erzeugung der Suspension in der Reaktoreinheit eingesetzt. Bei der Nassmahlung sind bei einem geringen spezifischen Energieverbrauch auch grobe phosphathaltige Rohstoffe verarbeitbar. Zudem weist die Rührwerkslagerung keine Produktberührung auf.

Bei einer Kombination von Trocken- und Nassmahlung im Verfahren findet der Mahlvorgang sowohl zeitlich vor als auch zeitlich während und/oder nach der Erzeugung der Suspension in der Reaktoreinheit statt. Eine Kombination von Trocken- und Nassmahlung ermöglicht eine Nachmahlung von Suspensionen und trockenen Rohstoffen. Vorteilhaft ist hierbei ein deutlich reduzierter Gesamtenergieverbrauch, eine Durchsatzerhöhung bei gleichbleibender Produktfeinheit oder alternativ eine Steigerung der Produktfeinheit bei gleichbleibendem Durchsatz. Ferner macht die Kombination mit von Trocken- und Nassmahlung den Einsatz von kontinuierlich und diskontinuierlich arbeitenden Mühlen möglich.

Durch den Einsatz der unterschiedlichen Mahlverfahren wird für den Anlagenbauer bei der Auslegung des Verfahrens die Möglichkeit geschaffen die Vorrichtung auf die unterschiedlichen phosphathaltigen Rohstoffe anzupassen und somit auch das Verfahren optimal an die weiterzuverarbeitenden phosphathaltigen Rohstoffe anzupassen und auf etwaige Vorgaben, wie bspw. die Investitionskosten, der Betreiber einzugehen.

Gemäß einer vorteilhaften Ausbildung der Vorrichtung weist die Vorrichtung eine Mischeinheit auf. Insbesondere bei Reaktionen, wie zum Beispiel dem Aufschluss von Phosphaten der phosphathaltigen Rohstoffe durch Säure, ist es von höchster Wichtigkeit, den Kontakt zwischen den Reaktionspartnern sicherzustellen. Hierzu können in der Reaktoreinheit konventionelle Rühreinheiten mit Rührantrieb zum Einsatz kommen. Durch den Einsatz einer Rühreinheit wird die aus phosphathaltigem Rohstoff und Säure gebildete Suspension verbessert durchmischt, sodass zum einen ein optimaler Aufschluss der in dem Rohstoff gebundenen Phosphate durch die Säure erfolgt und zum anderen eine hohe Mischgüte der Suspension erreicht wird. Bevorzugt umfasst die Mischeinheit ein Mischelement. Im als Rohreaktor ausgebildeten Reaktor werden als Mischelemente statische Mischer verbaut. Statische Mischer sind Apparate mit feststehenden Einbauten, die unter Nutzung der Strömungsenergie die Mischung fluider Produktströme, wie hier der Suspension, bewirken. Besonders bevorzugt ist die Mischeinheit in der Reaktionseinheit, vorzugsweise im als Rohrreaktor ausgebildeten Reaktor, angeordnet. Ganz besonders bevorzugt ist die Mischeinheit stromauf der Mahleinheit in der Reaktoreinheit angeordnet.

Entsprechend einer zusätzlichen vorteilhaften Ausgestaltung der Vorrichtung weist die Vorrichtung einen Zulauf für eine wässrige Lösung oder Wasser auf. Die Möglichkeit der Zuführung von wässriger Lösung oder von Wasser weist den Vorteil auf, dass die erzeugte Suspension aufgelockert wird und bessere Fließeigenschaften erreicht werden, sodass bspw. der Mahlvorgang in der Mahleinheit verbessert bzw. vereinfacht wird. Bevorzugt ist der Zulauf für eine wässrige Lösung oder Wasser stromauf der Mahleinheit angeordnet, um vor dem Mahlvorgang die Suspension zusätzlich durch die Zuführung der wässrigen Lösung oder von Wasser aufzulockern.

Nach einer weiteren vorteilhaften Weiterbildung der Vorrichtung umfasst die Vorrichtung eine pH-Wert-Regeleinrichtung. Bevorzugt ist diese in der Reaktoreinheit angeordnet. Besonders bevorzugt in dem als Rohrreaktor ausgebildeten Reaktor der Reaktoreinheit. Durch eine pH-Wert Regelung mittels pH-Wert-Regeleinrichtung besteht die Möglichkeit den pH-Wert der sich aus phosphathaltigem Rohstoff und Säure, insbesondere einer Mineralsäure, bildenden Suspension einzustellen. Die Einstellung des pH-Werts der Suspension wirkt sich auf die Klebrigkeit der Suspension aus, die wiederum für das Verdüsen der Suspension mittels Sprüheinrichtung von sehr großer Bedeutung ist. Je saurer die Suspension, desto klebriger ist diese. Bevorzugt erfolgt pH-Wert Messung in der Suspension und die Einstellung des pH-Wertes über die pH-Wert-Regeleinrichtung. Die pH-Wert Regelung kann auch als zusätzlicher, externer Regelkreis ausgebildet sein.

Gemäß einer zusätzlichen Fortbildung der Vorrichtung verfügt die Reaktoreinheit über eine Temperiereinheit zur Wärmezufuhr oder Wärmeabfuhr der Suspension. Bevorzugt ist die Temperiereinheit als Doppelmantel des Reaktors ausgebildet. Insbesondere ist der Rohrreaktor als Doppelmantelrohrreaktor ausgebildet. Mittels Wärmezufuhr oder Wärmeabfuhr lassen sich beispielsweise durch exotherme oder endotherme Reaktionen auftretende Temperaturänderungen besonders gut abfangen, sodass die gewünschten Reaktionsbedingungen stets erreicht werden und ermöglichen somit die optimale Kontrolle über das ablaufende Verfahren. Zudem ist die Ausführungsform eines einen Doppelmantel aufweisenden Reaktors sehr kostengünstig in der Herstellung und sehr einfach ausführbar.

Ferner verfügt die Vorrichtung über eine Klassiereinheit, bevorzugt ein Sieb oder einen Sichter. Bevorzugt ist die Klassiereinheit im Rohstoffzulauf angeordnet. Durch die Klassiereinheit erfolgt eine Trennung des phosphathaltigen Rohstoffs in Fraktionen, vorzugsweise nach den Kriterien Partikelgröße oder Partikeldichte. Ziel der Klassiereinheit ist die Herstellung von mindestens zwei Teilmengen des ursprünglichen phosphathaltigen Rohstoffs, wobei jede Teilmenge möglichst vollständig den vorgegebenen Partikelgrößenkriterien entspricht. Zusätzlich wird durch die Klassiereinheit neben dem Herausfiltern von groben Abfällen eine Vorauswahl der weiterzuverarbeitenden phosphathaltigen Rohstoffpartikel erreicht, insbesondere eine Homogenisierung der Partikelgröße, sodass das herzustellende Düngemittelgranulat eine besonders hohe Qualität aufweist.

Weitere Vorteile und vorteilhafte Ausgestaltungen der Erfindung sind der nachfolgenden Beschreibung und den Ansprüchen und entnehmbar.

Entsprechend einer vorteilhaften Weiterbildung der Vorrichtung verfügt die Reaktoreinheit über eine bevorzugt am Reaktor angeordnete Reaktorrezirkulationseinrichtung für die Suspension. Durch Änderung des Anteils des rezirkulierten Suspensionsstoffstroms ist das Reaktionsvolumen in der Reaktoreinheit und die Verweilzeit der Suspension in der Reaktoreinheit getrennt voneinander einstellbar. Durch die Rezirkulation der Suspension wird die durchschnittliche Verweilzeit der Suspension in der Reaktoreinheit verlängert, sodass ein verbesserter Aufschluss des in der Reaktoreinheit befindlichen phosphathaltigen Rohstoffs durch die Säure erreicht wird.

Bevorzugt weist die Reaktorrezirkulationseinrichtung die Mahleinheit auf. Der Mahlvorgang des phosphathaltigen Rohstoffs während der Rezirkulation der Suspension hat den Vorteil, dass hierdurch der phosphathaltige Rohstoff in der rezirkulierenden Suspension gemahlen wird und so die vorgenannten Merkmale einer vergrößerten Reaktionsoberfläche der Phosphathaltigen Rohstoffpartikel sowie eine beschleunigte Kinetik erzielt werden, wobei insbesondere jedoch die Verstopfungsgefahr, insbesondere in Düsen, an Klappen und Schiebern oder dergleichen, reduziert wird.

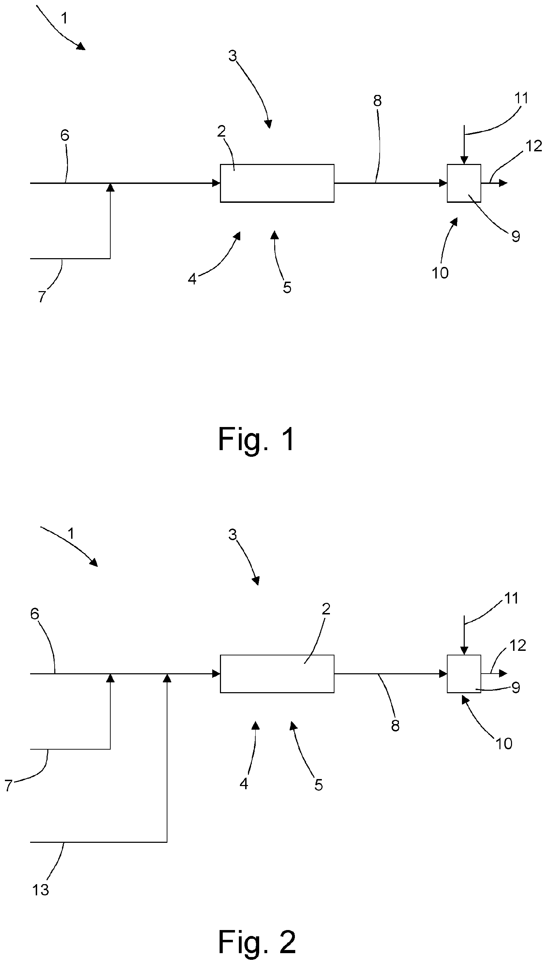

Nachfolgend wird die Erfindung anhand der beiliegenden Zeichnung näher erläutert dieser zeigen
- Figur 1: ein Grundfließbild eines ersten Ausführungsbeispiels einer eine in einer Reaktoreinheit angeordnete Mahleinheit aufweisende bevorzugten Vorrichtung zur Erzeugung der Suspension aus einem phosphathaltigen Rohstoff und einer Säure,
- Figur 2: ein Grundfließbild eines zweiten Ausführungsbeispiels einer eine in einer Reaktoreinheit angeordnete Mahleinheit aufweisende bevorzugten Vorrichtung zur Erzeugung der Suspension aus einem phosphathaltigen Rohstoff und einer Säure, wobei stromauf der Mahleinheit ein Zulauf für eine wässrige Lösung oder Wasser angeordnet ist,

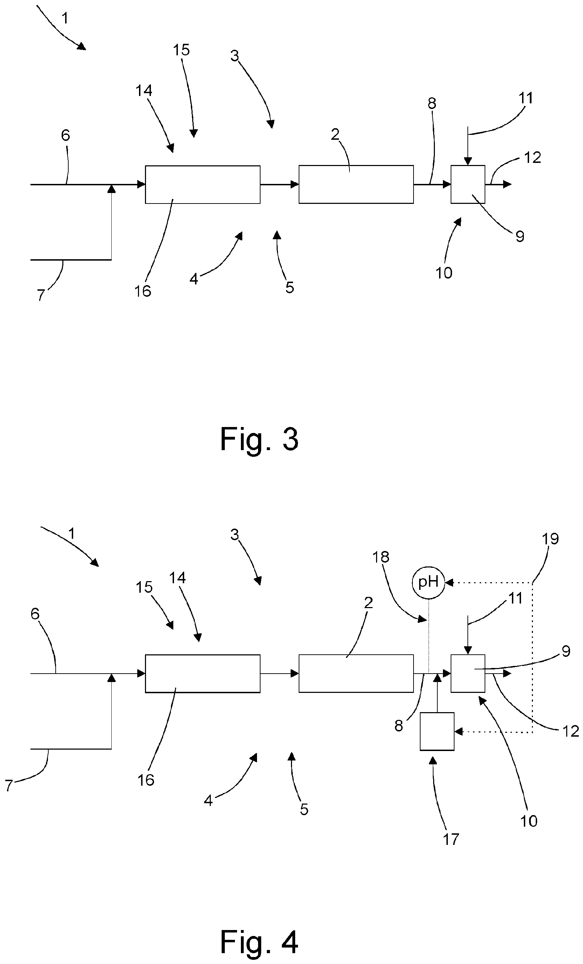

- Figur 3: ein Grundfließbild eines dritten Ausführungsbeispiels einer eine in einer Reaktoreinheit angeordnete Mahleinheit aufweisende bevorzugten Vorrichtung zur Erzeugung der Suspension aus einem phosphathaltigen Rohstoff und einer Säure, wobei stromauf einer Mahleinheit eine Mischeinheit angeordnet ist,
- Figur 4: ein Grundfließbild eines vierten Ausführungsbeispiels einer eine in einer Reaktoreinheit angeordnete Mahleinheit aufweisende bevorzugten Vorrichtung zur Erzeugung der Suspension aus einem phosphathaltigen Rohstoff und einer Säure, wobei stromauf einer Mahleinheit eine Mischeinheit angeordnet ist und wobei die Vorrichtung eine pH-Wert-Regeleinrichtung aufweist,

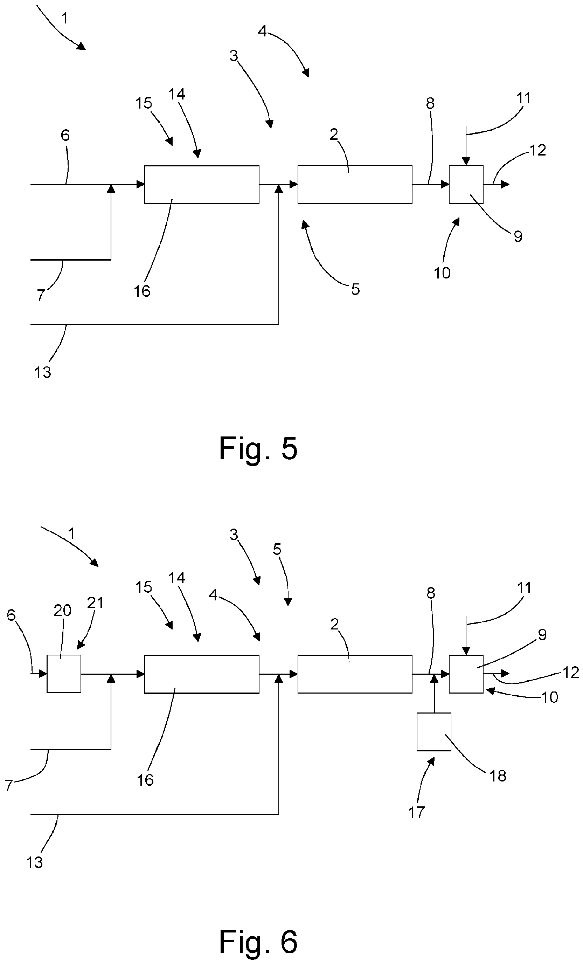

- Figur 5: ein Grundfließbild eines fünften Ausführungsbeispiels einer eine in einer Reaktoreinheit angeordnete Mahleinheit aufweisende bevorzugten Vorrichtung zur Erzeugung der Suspension aus einem phosphathaltigen Rohstoff und einer Säure, wobei stromauf einer Mahleinheit eine Mischeinheit angeordnet ist und wobei die Reaktoreinheit zwischen Mischund Mahleinheit über einen Zulauf für eine wässrige Lösung oder Wasser verfügt,
- Figur 6: ein Grundfließbild eines sechsten Ausführungsbeispiels einer eine in einer Reaktoreinheit angeordnete Mahleinheit aufweisende bevorzugten Vorrichtung zur Erzeugung der Suspension aus einem phosphathaltigen Rohstoff und einer Säure, wobei stromauf einer Mahleinheit eine Mischeinheit angeordnet ist, und wobei die Vorrichtung zwischen Misch- und Mahleinheit über einen Zulauf für eine wässrige Lösung oder Wasser verfügt, und wobei die Vorrichtung neben einer pH-Wert-Regeleinrichtung eine als Sieb ausgebildete Klassiereinheit aufweist, und

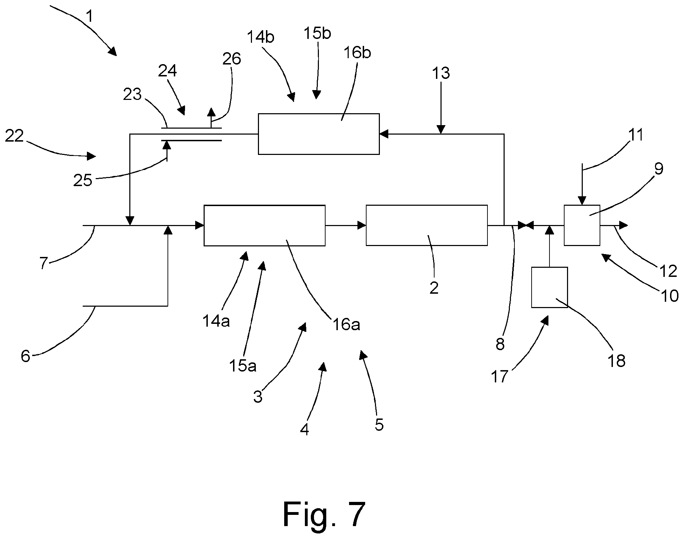

- Figur 7: ein Grundfließbild eines siebten Ausführungsbeispiels einer eine in einer Reaktoreinheit angeordnete Mahleinheit aufweisende bevorzugten Vorrichtung zur Erzeugung der Suspension aus einem phosphathaltigen Rohstoff und einer Säure, wobei stromauf einer Mahleinheit eine Mischeinheit angeordnet ist, und wobei die Reaktoreinheit über eine Reaktorrezirkulationseinrichtung für die Suspension verfügt.

Fig. 1 zeigt ein Grundfließbild eines ersten Ausführungsbeispiels einer bevorzugten Vorrichtung 1. Die Vorrichtung 1 weist eine Mahleinheit 2 in einer als Reaktor 3 ausgebildeten Reaktoreinheit 4 zur Erzeugung der Suspension aus einem phosphathaltigen Rohstoff und einer Säure auf.

Der Reaktor 3 der Reaktoreinheit 4 ist als Rohrreaktor 5 ausgebildet. Die Ausbildung des Reaktors 3 der Reaktoreinheit 4 als Rohrreaktor 5 weist die Vorteile auf, dass die Bauform einfach und kostengünstig realisierbar ist, gegenüber einem Rührkesselreaktor bei gleichem Umsatz im Vergleich ein wesentlich geringeres Reaktorvolumen aufweist und demgegenüber ein höherer Umsatz sowie eine höhere Selektivität erzielbar ist.

Der Rohrreaktor 5 verfügt über einen Rohstoffzulauf 6 für einen phosphathaltigen Rohstoff, einen Säurezulauf 7 für eine Säure und einen Reaktorablauf 8 für eine im Rohrreaktor 5 aus phosphathaltigem Rohstoff und Säure erzeugte Suspension. Als phosphathaltige Rohstoffe werden bspw. Aschen aus der Mono- oder Mitverbrennung von Klärschlamm, Tierausscheidungen, Tiermehl, Tierresten und Tierkörpern, Aschen aus der Verbrennung von Gülle und Gärresten als Einzelstoff bzw. Gemische daraus, immer wichtiger für die Industrie bezeichnet. Als phosphathaltige Rohstoffe gelten auch Gemische aus den vorgenannten Stoffen. Als Säuren werden Mineralsäuren, bevorzugt Salz-, Schwefel-, Salpeter- oder Phosphorsäure, oder ein beliebiges Gemisch aus den vorgenannten Mineralsäuren bezeichnet.

Zwischen Rohstoffzulauf 6 und Säurezulauf 7 einerseits und Reaktorablauf 8 andererseits ist in dem als Rohrreaktor 5 ausgebildeten Reaktor 3 der Reaktoreinheit 4 eine Mahleinheit 2 angeordnet.

Die Mahleinheit 2, die als Rohrreaktor 5 ausgebildete Reaktoreinheit 4 und die Sprüheinrichtung 10 sind fluidisch miteinander verbunden. Hierbei ist der Reaktorablauf 8 fluidisch mit einer als Sprühdüse 9 ausgebildeten Sprüheinrichtung 10 verbunden, wobei die Sprühdüse 9 einen Zerstäubergaszulauf 11 umfasst.

Die Vorrichtung 1 dient zur Durchführung des nachfolgend beschriebenen Verfahrens:
Der Phosphathaltige Rohstoff wird über den Rohstoffzulauf 6 und die Säure über den Säurezulauf 7 dem als Rohrreaktor 5 ausgebildeten Reaktor 3 der Reaktoreinheit 4 zugeführt. Als phosphathaltige Rohstoffe werden bspw. Aschen aus der Mono- oder Mitverbrennung von Klärschlamm, Tierausscheidungen, Tiermehl, Tierresten und Tierkörpern, Aschen aus der Verbrennung von Gülle und Gärresten als Einzelstoff bzw. Gemische daraus, immer wichtiger für die Industrie verwendet. Als phosphathaltige Rohstoffe gelten auch Gemische aus den vorgenannten Stoffen. Als Säuren werden Mineralsäuren, bevorzugt Salz-, Schwefel-, Salpeter- oder Phosphorsäure, oder ein beliebiges Gemisch aus den vorgenannten Mineralsäuren verwendet.

Phosphathaltiger Rohstoff und Säure bilden im Rohrreaktor 5 eine Suspension aus. Die im Rohrreaktor 5 erzeugte Suspension wird der Mahleinheit 2 zugeführt, in der die phosphathaltigen Rohstoffe zerkleinert bzw. gemahlen werden. Die Mahlung erfolgt im ersten Ausführungsbeispiel als Nassmahlung. Bei der Nassmahlung sind bei einem geringen spezifischen Energieverbrauch auch grobe phosphathaltige Rohstoffe verarbeitbar. Zudem weist die Rührwerkslagerung keine Produktberührung auf. Durch die Mahlung der phosphathaltigen Rohstoffe der Suspension in der Mahleinheit 2 wird die für chemische Reaktionen, d. h. den Aufschluss der Phosphate durch die Säure, zur Verfügung stehende Oberfläche vergrößert. Hierdurch wird die Verweilzeit in der Reaktoreinheit 4 für den Aufschluss der in dem phosphathaltigen Rohstoff gebundenen Phosphate durch die Säure aufgrund einer verbesserten Reaktionskinetik reduziert und es erfolgt eine gleichmäßigere Umsetzung der phosphathaltigen Rohstoffe.

Nach dem Durchlaufen der Mahleinheit 2 wird die Suspension der Sprühdüse 9, insbesondere einer Druck- oder Mehrstoffdüse, der Sprüheinrichtung 10 zugeführt und dort verdüst. Während des Verdüsungsvorgangs, insbesondere einer Sprühgranulation, bilden sich die Düngemittelgranulate aus. Die Düngemittelgranulate werden anschließend über einen Austrag 12 aus der Vorrichtung 1 entnommen.

Es besteht nach der Entnahme die Möglichkeit die Düngemittelgranulate nachzubehandeln, bspw. zu beschichten, weiter zu trocknen oder ähnliches.

Sowohl der in Fig. 1 beschriebene grundsätzliche Aufbau der Vorrichtung 1 als auch das auf der Vorrichtung 1 beruhende Verfahren werden in den weiteren Ausführungsbeispielen lediglich minimal modifiziert. Die Bezugszeichen werden für gleiche Bauteile in den weiteren Ausführungsbeispielen beibehalten.

In Fig. 2 wird ein Grundfließbild eines zweiten Ausführungsbeispiels einer bevorzugten Vorrichtung 1 dargestellt, wobei eine Mahleinheit 2 in einer als Rohrreaktor 5 ausgebildeten Reaktoreinheit 4 zur Erzeugung der Suspension aus einem phosphathaltigen Rohstoff und einer Säure angeordnet ist und die Reaktoreinheit 4 örtlich vor der Mahleinheit 2 einen Zulauf 13 für eine wässrige Lösung oder Wasser aufweist.

Die Möglichkeit der Zuführung von wässriger Lösung oder von Wasser durch den Zulauf 13 hat den Vorteil, dass die erzeugte Suspension aufgelockert wird und bessere Fließeigenschaften der Suspension erreicht werden, sodass bspw. der Mahlvorgang in der im Rohrreaktor 5 angeordneten Mahleinheit 2 erleichtert wird.

Im zweiten Ausführungsbeispiel ist der Zulauf 13 für eine wässrige Lösung oder Wasser somit stromauf der Mahleinheit 2, aber stromab des Rohstoff- und/oder Säurezulaufs 6, 7 angeordnet.

Ein Grundfließbild eines dritten Ausführungsbeispiels einer bevorzugten Vorrichtung ist in Fig. 3 gezeigt, wobei stromauf einer Mahleinheit 2 eine Mischeinheit 14 in einer als Rohrreaktor 5 ausgebildeten Reaktoreinheit 4 zur Erzeugung der Suspension aus einem phosphathaltigen Rohstoff und einer Säure angeordnet ist.

Die Mischeinheit 14 der Vorrichtung 1 umfasst ein Mischelement 15. Insbesondere bei Reaktionen, wie zum Beispiel dem Aufschluss von Phosphaten der phosphathaltigen Rohstoffe durch Säure, ist es von höchster Wichtigkeit, einen sehr guten Kontakt zwischen den Reaktionspartnern sicherzustellen. Hierzu ist in dem als Rohrreaktor 5 ausgebildeten Reaktor 3 der Reaktoreinheit 4 ein als statischer Mischer 15 ausgebildetes Mischelement 15 stromauf der Mahleinheit 2 angeordnet. Statische Mischer 16 sind Apparate mit feststehenden Einbauten, die unter Nutzung der Strömungsenergie die Mischung fluider Produktströme, wie hier der Suspension, bewirken.

Fig. 4 zeigt ein Grundfließbild eines vierten Ausführungsbeispiels einer bevorzugten Vorrichtung 1, wobei stromauf einer Mahleinheit 2 eine Mischeinheit 14 in einer Reaktoreinheit 4 zur Erzeugung der Suspension aus einem phosphathaltigen Rohstoff und einer Säure angeordnet ist, und wobei die Vorrichtung 1 eine pH-Wert-Regeleinrichtung 17 aufweist.

Bevorzugt weist die Vorrichtung 1 im als Rohrreaktor 5 ausgebildeten Reaktor 3 der Reaktoreinheit 4 eine pH-Wert-Messeinrichtung 18 und die pH-Wert-Regeleinrichtung 17 auf. Die pH-Wert-Messeinrichtung 18 und die pH-Wert-Regeleinrichtung 16 sind mittels einer Signalübertragung 19 miteinander gekoppelt.

So besteht die Möglichkeit den pH-Wert der zu versprühenden Suspension während des Verfahrens inline mit der pH-Wert-Messeinrichtung 18 zu messen, insbesondere stromauf der Sprüheinrichtung 10. Der gemessene pH-Wert dient als pH-Istwert und gibt Auskunft über die Klebrigkeit der Suspension. Je saurer die Suspension, desto klebriger ist die Suspension. Durch die Vorgabe eines pH-Sollwertes kann in einer Auswerteeinrichtung der pH-Wert-Regeleinrichtung 17 durch einen Vergleich von pH-Istwert und pH-Sollwert der pH-Wert der Suspension eingestellt werden, sodass sich diese ideal durch die eine Sprühdüse 9 aufweisende Sprüheinrichtung 10 sprühgranulieren lässt. Besonders bevorzugt wird der Reaktoreinheit 4 zur Einstellung des pH-Werts eine Säure oder eine Lauge zugeführt.

Diese Einstellung des pH-Werts der Suspension wirkt sich auf die Klebrigkeit der Suspension aus, die wiederum für das Verdüsen der Suspension mittels Sprüheinrichtung 10 von sehr großer Bedeutung ist.

In Fig. 5 ist ein Grundfließbild eines fünften Ausführungsbeispiels einer bevorzugten Vorrichtung 1 dargestellt, wobei stromauf einer Mahleinheit 2 eine Mischeinheit 14 in einer Reaktoreinheit 4 zur Erzeugung der Suspension aus einem phosphathaltigen Rohstoff und einer Säure angeordnet ist, und wobei die Reaktoreinheit 4 zwischen Misch- und Mahleinheit 14, 2 über einen Zulauf 13 für eine wässrige Lösung oder Wasser verfügt.

Die Möglichkeit der Zuführung von wässriger Lösung oder von Wasser durch den Zulauf 13 weist den Vorteil auf, dass die erzeugte Suspension aufgelockert wird und bessere Fließeigenschaften der Suspension erreicht werden, sodass bspw. der Mahlvorgang in der im Rohrreaktor 5 angeordneten Mahleinheit 2 erleichtert wird. Gleichzeitig kann durch eine solche Zuführung von wässriger Lösung oder Wasser durch Verdünnung der Suspension der pH-Wert beeinflusst werden, sodass weniger Säure oder Lauge zur Einstellung des für die Verdüsung idealen pH-Werts zugegeben werden muss.

Im fünften Ausführungsbeispiel ist der Zulauf 13 für eine wässrige Lösung oder Wasser somit stromauf der Mahleinheit 2 und Stromab der Mischeinheit 14 angeordnet.

Ein Grundfließbild eines sechsten Ausführungsbeispiels einer bevorzugten Vorrichtung 1, wobei stromauf einer Mahleinheit 2 eine Mischeinheit 14 in einer Reaktoreinheit 4 zur Erzeugung der Suspension aus einem phosphathaltigen Rohstoff und einer Säure angeordnet ist, die Reaktoreinheit 4 zwischen Mischeinheit 14 und Mahleinheit 2 über einen Zulauf 13 für eine wässrige Lösung oder Wasser verfügt, und wobei die Vorrichtung 1 neben einer pH-Wert-Regeleinrichtung 17 eine als Sieb 19 ausgebildete Klassiereinheit 20 aufweist, ist in Fig. 6 dargestellt.

Mit der in der Rohstoffzuleitung 6 angeordneten als Sieb 20 ausgebildeten Klassiereinheit 21 erfolgt neben dem Herausfiltern von groben Abfällen durch die Klassiereinheit 21 eine Vorauswahl der weiterzuverarbeitenden phosphathaltigen Rohstoffpartikel erreicht, insbesondere eine Homogenisierung der Partikelgröße, sodass das herzustellende Düngemittelgranulat eine besonders hohe Qualität aufweist. Ziel der Klassiereinheit 21 ist die Herstellung von mindestens zwei Teilmengen des ursprünglichen phosphathaltigen Rohstoffs, wobei jede Teilmenge möglichst vollständig den vorgegebenen Partikelgrößenkriterien entspricht und anschließend jeweils weiterverarbeitet wird.

Zudem weist die Vorrichtung 1 im als Rohrreaktor 5 ausgebildeten Reaktor 3 der Reaktoreinheit 4 eine in die pH-Wert-Regeleinrichtung 17 integrierte pH-Wert-Messeinrichtung 18 auf.

Die pH-Wert-Messeinrichtung 18 misst den pH-Istwert der Suspension und übermittelt das Ergebnis an eine Regeleinrichtung, die den pH-Istwert mit einem vorgegebenen pH-Sollwert vergleicht und den pH-Wert der Suspension zeitlich vor der Granulation und/oder Trocknung auf den gewünschten pH-Wert einstellt. Der gemessene pH-Wert gibt Auskunft über die Klebrigkeit der Suspension. Je saurer die Suspension, desto klebriger ist diese. Besonders bevorzugt wird der Reaktoreinheit 4 zur Einstellung des pH-Werts eine Säure oder eine Lauge zugeführt.

Die Einstellung des pH-Werts der Suspension wirkt sich, wie zuvor erläutert, auf die Klebrigkeit der Suspension aus, die wiederum für das Verdüsen der Suspension mittels der Sprüheinrichtung 10 von größter Bedeutung ist.

In allen vorgenannten Ausführungsbeispielen kann die Reaktoreinheit über eine Temperiereinheit zur Wärmezufuhr oder Wärmeabfuhr der Suspension verfügen. Bevorzugt ist diese als Doppelmantel des Reaktors 3 ausgebildet. Besonders bevorzugt ist der Rohrreaktor 5 als Doppelmantelrohrreaktor ausgebildet.

Fig. 7 zeigt ein Grundfließbild eines siebten Ausführungsbeispiels einer eine in einer Reaktoreinheit 3 angeordnete Mahleinheit 2 aufweisende bevorzugten Vorrichtung 1 zur Erzeugung der Suspension aus einem phosphathaltigen Rohstoff und einer Säure, wobei stromauf einer Mahleinheit 2 eine Mischeinheit 14 angeordnet ist, und wobei die Reaktoreinheit 3 über eine Reaktorrezirkulationseinrichtung 22 für die Suspension verfügt.

Auch im siebten Ausführungsbeispiel ist die Säure bevorzugt eine Mineralsäure oder ein beliebiges Gemisch aus Mineralsäuren, nämlich Salz-, Schwefel-, Salpeter- oder Phosphorsäure.

Die Vorrichtung 1 zur Herstellung von Düngemittelgranulat weist die über einen Rohstoffzulauf 6 für die phosphathaltigen Rohstoffe, einen Säurezulauf 7 für die bevorzugten Mineralsäuren und einen Reaktorablauf 8 für die Suspension verfügende und einen als Rohrreaktor 5 ausgebildeten Reaktor 3 zur Erzeugung einer Suspension aus dem phosphathaltigen Rohstoff und der Säure aufweisende Reaktoreinheit 4 sowie eine stromab der Reaktoreinheit 4 angeordnete Sprüheinrichtung 10. Bevorzugt ist die Sprüheinrichtung als Sprühgranulator zur Granulation der erzeugten Suspension in Form einer Wirbel- oder Strahlschichtapparat ausgebildet.

Zudem verfügt die als Rohrreaktor 5 ausgebildete Reaktoreinheit 4 über eine ein als statischen Mischer 16a ausgebildetes Mischelement 15a aufweisende erste Mischeinheit 14a und stromab der ersten Mischeinheit 14a über eine Mahleinheit 2. Der somit im siebten Ausführungsbeispiel durchgeführte Mahlvorgang ist eine Nassmahlung, die vorteilhafterweise einen geringen spezifischen Energieverbrauch aufweist und zusätzlich grobe in der Suspension anfallende phosphathaltige Rohstoffe verbessert verarbeiten kann.

Darüber hinaus verfügt die Reaktoreinheit 4 über eine am als Rohrreaktor 5 ausgebildeten Reaktor 3 der Reaktoreinheit 4 angeordnete Reaktorrezirkulationseinrichtung 22 für die Suspension. Die Reaktorrezirkulationseinrichtung 22 rezirkuliert die Suspension, indem diese erzeugte Suspension zwischen Mahleinheit 2 und Sprüheinrichtung 10 abzweigt und in den Säurezulauf 7 der Reaktoreinheit zurückführt.

Im siebten Ausführungsbeispiel weist die Reaktorrezirkulationseinrichtung 22 eine als statischen Mischer 16b ausgebildetes Mischelement 15b aufweisende zusätzliche zweite Mischeinheit 14b zur weiteren Vermischung der erzeugten Suspension auf. Die Reaktorrezirkulationseinrichtung 22 umfasst zudem einen Zulauf 13. Hierdurch besteht die Möglichkeit der Reaktoreinheit 4 eine wässrige Lösung oder Wasser zur Verdünnung, Vermischung und/oder Aufschlämmung der erzeugten Suspension zuzuführen.

Die einzelnen Komponenten der bevorzugten Vorrichtung 1, insbesondere Mahleinheit 2, Mischeinheiten 14a und 14b, Reaktoreinheit 4 und Sprüheinrichtung 10 sind im siebten Ausführungsbeispiel fluidisch miteinander verbunden, wobei die fluidische Verbindung der einzelnen Vorrichtungskomponenten durch Leitungen, insbesondere Rohr- und/oder flexible Schlauchleitungen, hergestellt wird.

Zusätzlich verfügt die Reaktoreinheit im siebten Ausführungsbeispiel über eine als Doppelmantel 23 ausgebildete Temperiereinheit 24 zur Wärmezufuhr oder Wärmeabfuhr der Suspension, die in Fig. 7 zumindest angedeutet dargestellt ist. Diese weist einen Temperiereinheitzulauf 25 und einen Temperiereinheitablauf 26 für das durch den Doppelmantel 23 strömende Heizmedium auf. Dient die Temperiereinheit 24 zur Kühlung wird als Heizmedium ein Kühlmedium eingesetzt.

Zudem weist die Vorrichtung 1 im als Rohrreaktor 5 ausgebildeten Reaktor 3 der Reaktoreinheit 4 mit Reaktorrezirkulationseinrichtung 22 eine in die pH-Wert-Regeleinrichtung 17 integrierte pH-Wert-Messeinrichtung 18 auf.

Die pH-Wert-Messeinrichtung 18 misst den pH-Istwert der Suspension und übermittelt das Ergebnis an eine Regeleinrichtung, die den pH-Istwert mit einem vorgegebenen pH-Sollwert vergleicht und den pH-Wert der Suspension zeitlich vor der Granulation und/oder Trocknung auf den gewünschten pH-Wert einstellt. Der gemessene pH-Wert gibt Auskunft über die Klebrigkeit der Suspension. Je saurer die Suspension, desto klebriger ist diese. Besonders bevorzugt wird der Reaktoreinheit 4 zur Einstellung des pH-Werts eine Säure oder eine Lauge zugeführt.

Die Einstellung des pH-Werts der Suspension wirkt sich, wie zuvor erläutert, auf die Klebrigkeit der Suspension aus, die wiederum für das Verdüsen der Suspension mittels der Sprüheinrichtung 10 von größter Bedeutung ist.

Das Verfahren zur Herstellung von Düngemittelgranulat läuft in der dem dritten Ausführungsbeispiel entsprechenden Vorrichtung 1 wie folgt ab:
Zuerst wird dem als Rohrreaktor 5 ausgebildeten Reaktor 3 der Reaktoreinheit 4 über den Rohstoffzulauf 6 ein phosphathaltiger Rohstoff und über den Säurezulauf 7 eine Säure, bevorzugt eine Mineralsäure, bspw. Salz-, Schwefel-, Salpeter- oder Phosphorsäure, oder ein beliebiges Gemisch aus den vorgenannten Mineralsäuren, zugeführt.

Der phosphathaltige Rohstoff und die Säure bilden im Reaktor 3 der Reaktoreinheit 4 eine Suspension. Die Bildung der Suspension und deren Vermischung wird durch die Mischeinheit 14a gefördert. Die bei der Erzeugung der Reaktion zuzuführende oder abzuführende Wärme wird über die als Doppelmantel 23 ausgebildete Temperiereinheit 24 in den als Rohrreaktor 5 ausgebildeten Reaktor 3 ein- oder ausgebracht.

Zur Verlängerung der Verweilzeit in der Reaktoreinheit 4 wird die im Reaktor 3 erzeugte Suspension mittels einer Reaktorrezirkulationseinrichtung 22 in der Reaktoreinheit 4 rezirkuliert. Die Reaktorrezirkulationseinrichtung 22 wird im einfachsten Fall aus einer Rohrleitung und einer Fördereinrichtung ausgebildet. Durch die Rezirkulation erfolgt ein verbesserter Aufschluss des in der Reaktoreinheit 4 befindlichen phosphathaltigen Rohstoffe durch die Säure. Zudem wird durch die Änderung des Anteils des rezirkulierten Suspensionsstoffstroms das Reaktionsvolumen in der Reaktoreinheit 4 und die Verweilzeit der Suspension in der Reaktoreinheit 4 getrennt voneinander einstellbar.

Die als Rohrreaktor ausgebildete Reaktoreinheit 4 verfügt über die Mahleinheit 2. Hierdurch wird der phosphathaltige Rohstoff in der erzeugten und rezirkulierten Suspension gemahlen bzw. zerkleinert und durch die vergrößerte Reaktionsoberfläche der phosphathaltigen Rohstoffpartikel wird eine beschleunigte Kinetik erreicht. Insbesondere wird jedoch die Verstopfungsgefahr bspw. in Düsen der Sprüheinrichtung 10, insbesondere in einem Sprühgranulator reduziert. Der Mahlvorgang der phosphathaltigen Rohstoffe in der Reaktoreinheit 4 erfolgt als Nassmahlung, die eine hohe Mahleffektivität bei geringem Platzbedarf und geringem spezifischen Energieverbrauch aufweist und bei der die gewünschte Endfeinheit der Rohstoffpartikel des phosphathaltigen Rohstoffs frei und exakt einstellbar sind.

Die Reaktorrezirkulationseinrichtung 22 weist den weiteren Zulauf 13 zur Zuführung einer wässrigen Lösung oder Wasser auf.

Nach der Verweilzeit der Suspension in der Reaktoreinheit 4 wird im Anschluss die erzeugte Suspension über den Reaktorablauf 8 einer Sprüheinrichtung 10 zur Granulation zugeführt. Die fertigen Düngemittelgranulate werden der Vorrichtung 1 über den Austrag 12 nach ihrer Herstellung entnommen.

Bevorzugt wird die mit dem phosphathaltigen Rohstoff reagierende Säure über den Säurezulauf 7, bevorzugt eine Mineralsäure, derart passend zu den phosphathaltigen Rohstoffen ausgewählt, sodass in der in der Reaktoreinheit 4 erzeugten Suspension die schwerlöslichen Phosphate des phosphathaltigen Rohstoffs zumindest teilweise durch die Säure gelöst und in eine neutral-ammoniumcitratlösliche Phosphatphase umgewandelt werden, sodass sich ein Düngemittelgranulat bildet dessen P₂O₅-Gehalt (P-Gehalt) größer 75 % neutralammoniumcitratlöslich ist, bevorzugt größer 80 %, besonders bevorzugt größer 85 %. Durch die aufgrund des Mahlvorgangs feineren phosphathaltigen Rohstoffpartikel weisen diese eine größere reaktive Oberfläche auf, sodass aus dem phosphathaltigen Rohstoff die schwerlöslichen Phosphate mittels der Säure verbessert herauslösbar sind.

## Patentansprüche

1. Verfahren zur Herstellung von Düngemittelgranulat, wobei zuerst eine Suspension aus einem phosphathaltigen Rohstoff und einer Säure in einer einen Reaktor (3) aufweisenden Reaktoreinheit (4) erzeugt wird, **dadurch gekennzeichnet, dass** ein Mahlvorgang in der Reaktoreinheit (4) erfolgt und die Suspension danach einer Sprüheinrichtung (10) zur Granulation und/oder Trocknung zugeführt wird.

2. Verfahren nach Anspruch 1, **dadurch gekennzeichnet, dass** eine Sprühgranulation durchgeführt wird.

3. Verfahren nach Anspruch 1 oder 2, **dadurch gekennzeichnet, dass** der Mahlvorgang als Trockenmahlung oder Nassmahlung erfolgt.

4. Verfahren nach einem der vorhergehenden Ansprüche, **dadurch gekennzeichnet, dass** der Mahlvorgang zeitlich vor oder nach der Erzeugung der Suspension erfolgt.

5. Verfahren nach einem der vorhergehenden Ansprüche, **dadurch gekennzeichnet, dass** der Mahlvorgang zeitlich vor oder nach einem Mischvorgang der Suspension erfolgt.

6. Verfahren nach einem der vorhergehenden Ansprüche, **dadurch gekennzeichnet, dass** die Säure eine Mineralsäure, bevorzugt Salzsäure, Schwefelsäure, Salpetersäure oder Phosphorsäure, oder ein beliebiges Gemisch aus den Mineralsäuren ist.

7. Verfahren nach einem der vorhergehenden Ansprüche, **dadurch gekennzeichnet, dass** der Reaktoreinheit (4) eine wässrige Lösung oder Wasser zugeführt wird.

8. Verfahren nach Anspruch 7, **dadurch gekennzeichnet, dass** der Reaktoreinheit (4) zwischen Mischvorgang und Mahlvorgang eine wässrige Lösung oder Wasser zugeführt wird.

9. Verfahren nach einem der vorhergehenden Ansprüche, **dadurch gekennzeichnet, dass** ein pH-Wert der Suspension in der Reaktoreinheit (4) eingestellt wird, um eine Klebrigkeit der Suspension einzustellen.

10. Verfahren nach Anspruch 9, **dadurch gekennzeichnet, dass** der pH-Wert der Suspension zeitlich vor der Granulation und/oder Trocknung eingestellt wird.

11. Verfahren nach Anspruch 9 oder 10, **dadurch gekennzeichnet, dass** der Reaktoreinheit (4) zur Einstellung des pH-Werts eine Säure oder eine Lauge zugeführt wird.

12. Verfahren nach einem der vorhergehenden Ansprüche, **dadurch gekennzeichnet, dass** der phosphathaltige Rohstoff zeitlich vor einer Zuführung zur Reaktoreinheit (4) klassiert wird.

13. Verfahren nach Anspruch 12, **dadurch gekennzeichnet, dass** das Klassieren mittels Sieben oder Sichten erfolgt.

14. Verfahren nach einem der vorhergehenden Ansprüche, **dadurch gekennzeichnet, dass** die in der Reaktoreinheit (4) erzeugte Suspension rezirkuliert wird.
